Europäisches Patentamt

European Patent Office

Office européen des brevets

(19)

(11) **EP 1 051 867 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(51) Int Cl.[7]: **H04Q 3/66**

(21) Anmeldenummer: **98965264.9**

(86) Internationale Anmeldenummer:
**PCT/EP98/08210**

(22) Anmeldetag: **15.12.1998**

(87) Internationale Veröffentlichungsnummer:
**WO 99/038341 (29.07.1999 Gazette 1999/30)**

(54) **VERFAHREN ZUR ÜBERLAST-ABWEHR FÜR EINE VERMITTLUNGSSTELLE**

METHOD FOR OVERLOAD CONTROL FOR A SWITCHING CENTER

PROCEDE DE REDUCTION DES SURCHARGES POUR CENTRAL TELEPHONIQUE

(84) Benannte Vertragsstaaten:
**DE ES GB IT**

(30) Priorität: **27.01.1998 EP 98101399**

(43) Veröffentlichungstag der Anmeldung:
**15.11.2000 Patentblatt 2000/46**

(73) Patentinhaber: **SIEMENS AKTIENGESELLSCHAFT**
**80333 München (DE)**

(72) Erfinder:
• **KÖSTER, Gerta**
**D-81543 München (DE)**

• **GRADISCHNIG, Klaus**
**D-82131 Gauting (DE)**
• **OEHLERICH, Jörg**
**D-82131 Stockdorf (DE)**

(56) Entgegenhaltungen:
**EP-A- 0 400 879** **EP-A- 0 696 147**
**US-A- 5 253 248**

• **REGNIER J ET AL: "STATE-DEPENDENT DYNAMIC TRAFFIC MANAGEMENT FOR TELEPHONE NETWORKS" IEEE COMMUNICATIONS MAGAZINE, Bd. 28, Nr. 10, 1. Oktober 1990, Seiten 42-53, XP000165754**

EP 1 051 867 B1

**Beschreibung**

Automatic Congestion Control (ACC) ist ein netzweiter Abwehrmechanismus mit dem Vermittlungsstellen vor Überlast geschützt werden sollen. ACC gewinnt gegenüber anderen standardisierten Ansätzen an Bedeutung, da herstellereigene Verfahren - wie z.B. "Delayed Release" bei Siemens - in Zukunft durch die Standards eingeschränkt werden. Zudem ist ACC der einzige für Breitbandvermittlungsstellen vorgesehene Abwehrmechanismus. Die Wirkung von ACC ist jedoch mangelhaft, wie durch Netzsimulationen nachgewiesen werden konnte. Die Leistung einer Vermittlungstelle in Überlast sackt drastisch ab. Es besteht große Gefahr von Bufferüberläufen.

Im folgenden wird der Mechanismus nach Standard beschrieben.

**Automatic Congestion Control nach ITU-Standard**

Automatic Congestion Control ist in den ITU-Standards E.412, E.542, Q.763 und Q.764 beschrieben. Die Grundidee ist, Verkehr in Richtung einer überlasteten Vermittlungsstelle (VST) bereits an an den Nachbar-Vermittlungsstelle zu drosseln - also erst gar nicht an die überlastete VST heranzulassen. Dieser Ansatz birgt drei grundlegende Probleme, von deren Lösung, die Güte des Algorithmus abhängt:

- die Information der Nachbarknoten,
- die Steuerung der Reaktionen an den Nachbarknoten,
- die Rückkoppelung über den Erfolg der Maßnahmen.

ACC sieht 2 Werte vor, um Überlast zu beschreiben:

- Ein Automatic Congestion Level (ACL) von 1 bedeutet Überlast.
- Ein ACL von 2 steht für starke Überlast.

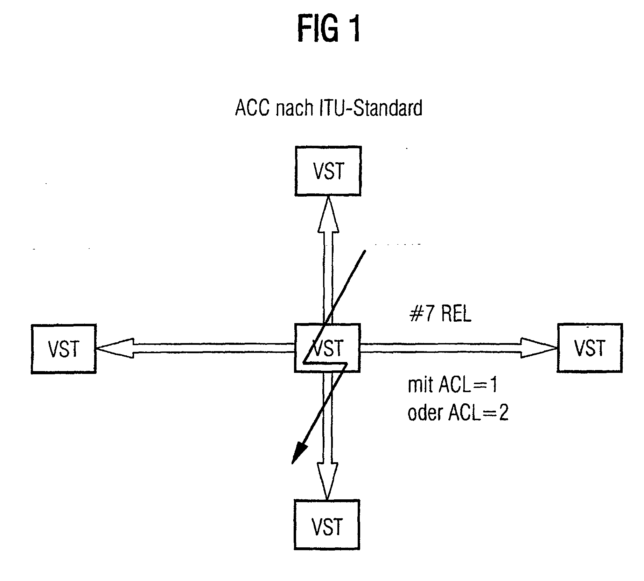

Der ACL wird an der überlasteten VST bestimmt. Er wird mit der #7-Meldung REL (release), die beim Auslösen eines Calls zwischen den betroffenen Vermittlungstellen verschickt wird, an die Nachbar-Vermittlungsstellen übertragen (siehe FIG 1). Erhält eine VST einen positiven ACL von einer Nachbar-VST, wird ein Timer von zur Zeit 10s aufgezogen, der dafür sorgen soll, daß eventuelle Abwehrmaßnahmen wieder eingestellt (d.h. aufgehoben) werden, falls nach Timerablauf kein neuer positiver ACL eingetrifft.

An den Nachbar-VSTn der überlasteten VST sollen je nach ACL-Wert ein gewisser Prozentsatz aller Calls abgewehrt oder auf alternativem Weg geroutet werden. Die Entscheidung darüber, welche Maßnahme ergriffen wird, steht dem Betreiber frei. Als einzige Vorschrift muß der Prozentsatz ein Vielfaches von 12,5 % (1/8) sein.

**Automatic Congestion Control in der EWSD-Implementierung**

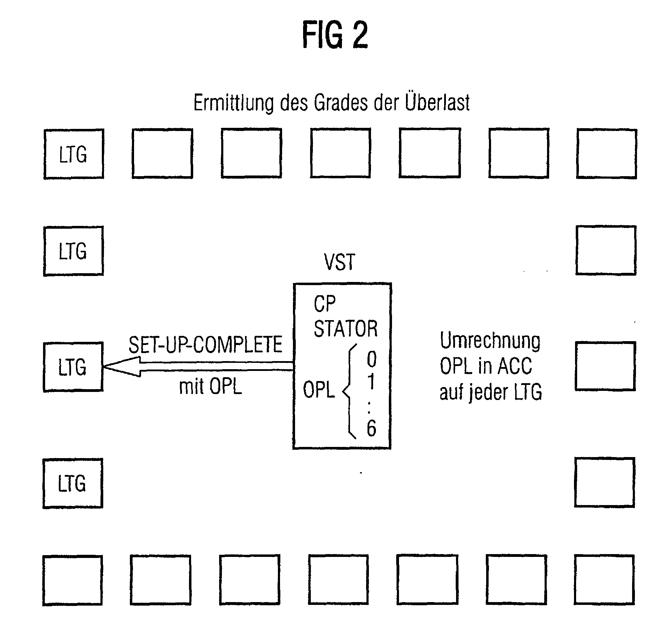

Im folgenden wird die Implementierung der ACC in dem System EWSD näher erläutert (siehe FIG 2).

Die EWSD-Implementierung folgt dem ACC-Standard. Unter Überlast wird CP-Überlast verstanden. An der überlasteten VST wird der Grad der Überlast mit Hilfe des STATOR-Algorithmus ermittelt, der Anzahl und mittlere Bearbeitungszeit aller am CP eingetroffenen Meldungen und die Rechenkapazität berücksichtigt. Eventuelle Überlast wird in den Overload Priority level (OPL) mit den Überlastgraden 0, 1, 2, 3, 4, 5, 6 übersetzt.

In der überlasteten VST wird vom CP der OPL jeweils mit dem "Rucksackverfahren" ("piggy-back") an Commands mit JC1 = 0 (job code 1) angehängt und so an die LTGs weitergeleitet. Commands mit JC1=0 sind SET-UP-COMPLETE (beim Aufbau eines Calls) und COME-AGAIN (Anforderung von mehr Information). Dieses Verfahren bedeutet, daß der OPL-Wert auf einer LTG nur dann aktualisiert wird, wenn über die LTG ein Call etabliert wird. Dadurch entsteht eine Diffusion der Information, die sich bezüglich ACC nachteilig auswirkt. Es gibt einige Ausnahmeregeln im Verfahren: Zu Beginn einer Überlastsituation - also wenn der STATOR nach einer Phase mit normaler Last zum ersten Mal Überlast feststellt -, wird ein OPL von 3 über das Command: ADJUST-OPL gleichzeitig an alle LTGs verschickt. Droht die VT-Eingabeliste (vermittlungstechnische Eingabeliste) am CP überzulaufen (mehr als 800 Einträge), so wird der OPL=6 mit dem Command: ADJUST-OPL ausgegeben.

An der LTG wird der OPL nach folgenden Schema in einen ACL übersetzt. Der ACL-Wert 0 steht hier für keine oder wenig Überlast.

| OPL | ACL |
|-----|-----|
| 0 | 0 |

(fortgesetzt)

| OPL | ACL |
|---|---|
| 1 | 0 |
| 2 | 0 |
| 3 | 1 |
| 4 | 1 |
| 5 | 2 |
| 6 | 2 |

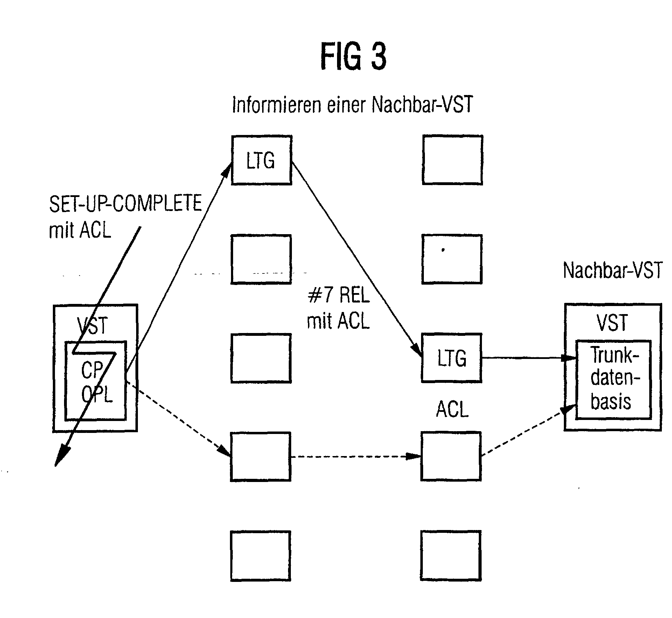

Von einer LTG an der überlasteten VST wird ein ACL nun gemäß dem #7-Standard mit jeder Meldung REL an die Nachbarn verschickt (siehe FIG 3). Dort wird der ACL ebenfalls auf einer LTG empfangen. Mit der Message: REL-C (release complete), die den CP über die Auflösung eines Calls informiert, wird der ACL von dem GP der LTG zum CP der Nachbar-VST transportiert und dort bündelbezogen in die Trunkdatenbasis eingetragen. Das bedeutet, daß an der Nachbar-VST bündelbezogen abgewehrt bzw. alternativ geroutet wird. Das bedeutet des weiteren, daß an der Nachbar-VST nahezu gleichzeitig verschiedene - das heißt widersprüchliche - ACL-Informationen zu einem Bündel in Richtung der überlasteten VST empfangen werden können. Diese Information können zum Beispiel von verschiedenen LTGs der überlasteten VST stammen. Positive ACL-Werte überschreiben sich dabei sofort.

In der Trunkdatenbasis des CP wird mit jedem Eintreffen eines positiven ACL ein Timer von 10s aufgezogen. Läuft dieser Timer ab, ohne daß ein neuer positiver ACL empfangen wird, wird der ACL in der Trunkdatenbasis um 1 herabgezählt und der Timer wird - im Falle eines neuen ACL-Wertes von 1 - neu aufgezogen.

An den Nachbarvermittlungstellen ist die Art und Stärke der Reaktion in Tabellen festgelegt, die manuell eingerichtet werden. Die Abwehr erfolgt pauschal, wie im Standard vorgesehen. So könnten z.B. bei einem ACL von 1 50% aller Calls abgewehrt werden und bei einem ACL von 2 100 %.

**Drei Hauptprobleme des ACC-Algorithmus**

Für die in Simulationen festgestellten Leistungsdefizite bei ACC sind vor allem drei Schwachpunkte des Algorithmus verantwortlich. Alle führen sie zu heftigen, abrupten Angebotschwankungen in deren Folge Listen voll- und überlaufen, die Wartezeiten lang werden und der Durchsatz absackt.

**Problem 1: Grobe Steuerung**

Die sehr grobe Steuerung der Abwehr mit nur 2 ACL-Werten und entsprechenden Abwehrraten führt zu heftigen Angebotschwankungen, wodurch die Eingabeliste am CP sehr lang wird und der Durchsatz sinkt.

**Problem 2: "Scheunentor-Effekt"**

Geht eine VST in Überlast, so sendet sie an *alle* Nachbar-VSTn (fast) gleichzeitig den selben ACL. Damit wird an allen Nachbar-VSTn pauschal der selbe Verkehrsanteil in Richtung der überlasteten VST gedrosselt. Bei einem ACL von 1, also "normaler" Überlast bedeutet dies meist, daß die überlastete VST nun weniger Verkehr angeboten bekommt, als sie tatsächlich abwickeln kann. Sie geht in *Unterlast* und der STATOR errechnet einen OPL von 0. Die Nachbarn drosseln dennoch für mindestens 10s weiter den Verkehr, bis der Timer an allen Nachbarn abgelaufen ist, dort die ACLs in der Trunkdatenbasis zurückgesetzt sind und wieder der *volle* Verkehr zugelassen wird. Das "Scheunentor" wird damit wieder geöffnet. Die VST stellt sofort wieder Überlast fest und der Prozeß wiederholt sich.

Die Abwehrperiode kann länger als die 10s des Timers dauern, wenn auf einigen LTGs der überlasteten VST ACLs verweilen, die länger nicht durch ein Command: SET-UP-COMPLETE/COME-AGAIN aktualisiert wurden. Diese inkorrekten ACLs werden ja weiter über REL-Meldungen an die Nachbarn verteilt und überschreiben dort Nullwerte in den Trunkdatenbasen. Bei hoher Überlast mit ACL 2 fallen die Auswirkungen des Timers weg, da positive ACL-Werte sofort in die Trunkdatenbasis eingetragen werden. Dennoch ergibt sich durch die verweilenden, nicht aktualisierten ACLs ein ähnlich ungünstiger Effekt.

Der "Scheunentoreffekt" führt somit ebenfalls zu heftigen, abrupten Angebotschwankungen. Es ergeben sich lange Warteschlangen und -zeiten am CP und der Durchsatz bricht ein.

**Problem 3: Informationsdefizite bei hohen Abwehrraten**

Der ACL wird übertragen, indem man ihn an Meldungen hängt, die zu Calls gehören (SET-UP-COMPLETE, COME-AGAIN, REL, REL-C). Damit ist ein gewisser Anteil an erfolgreich an die überlastete VST weitergeleiteten Calls notwendig, um den Informationsaustausch zu gewährleisten. Bei hohen pauschalen Abwehrraten (100%) entstehen aber Situationen, in denen fast kein Call zur überlasteten VST geroutet wird. Zu wenige Commands:SET-UP-COMPLETE führen dazu, daß OPL und ACL auf den LTGs der überlasteten VST nicht aktuell sind. Zu wenig REL-Meldungen verursachen veraltete ACLs auf den Nachbar-Vermittlungstellen. Um zu verhindern, daß Überlastwerte endlos bestehen, wenn der Informationsaustausch völlig zum Erliegen kommt, wird auf den LTGs der überlasteten VST alle 4 Sekunden der OPL herabgezählt und der ACL entsprechend angepaßt. Diese "Notbremse" kann die Problematik allerdings nur mildern.

Versucht man die genannten Probleme zu lösen, indem man den 10s-Timer einer Nachbar-VST verkürzt, zeigen sich die selben negativen Effekte. Zusätzlich ist bei großer Überlast nun aber die Abwehrphase zu kurz, so daß die überlaufenden Listen nicht mehr abgebaut werden können.

Der Erfindung liegt die Aufgabe zugrunde, die genannten Probleme zu lösen.

Diese Aufgabe wird durch ein Verfahren nach Anspruch 1 gelöst.

Durch die Erfindung wird die Abwehrsteuerung verbessert, ohne daß zwischen den VST ein bzgl. der Überlast-Abwehr netzweit festgelegter Informationsaustausch verändert bzw. verletzt werden muß.

Im folgenden wird ein Ausführungsbeispiel der Erfindung anhand der Zeichnung näher erläutert, wobei die Zeichnung 4 Figuren umfaßt.

FIG 1 zeigt das ACC-Verfahren nach ITU-Standard.

FIG 2 zeigt die Ermittlung des Grades der Überlast (ACL-Wert) in der überlasteten VST.

FIG 3 zeigt das Informieren einer Nachbar-VST anhand gesendeter ACL-Werte.

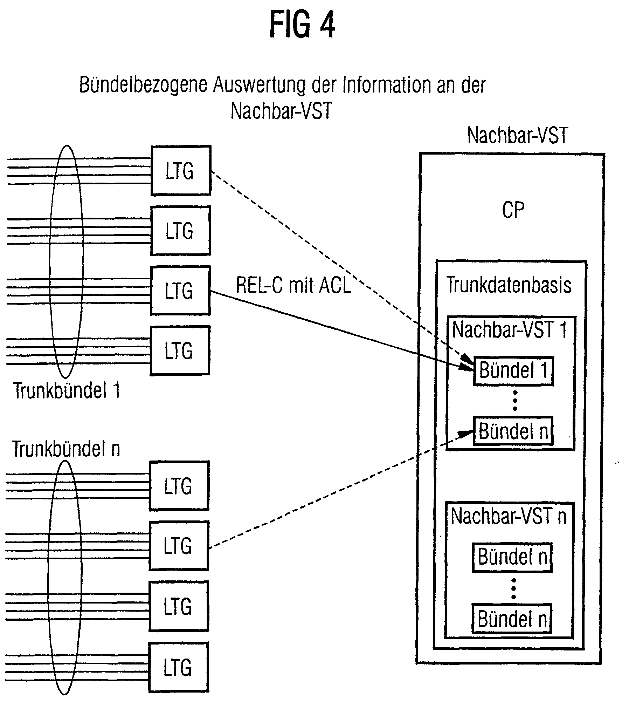

FIG 4 zeigt die bündelbezogene Auswertung der ACL-Wert-Information in der Nachbar-VST.

Das erfindungsgemäße Verfahren ermittelt aus der von einer Nachbar-Vermittlungsstelle empfangenen Grobinformation (ACL-Werte) einen sogenannten effektiven Überlastwert (OCL-Wert), der dem tatsächlichen Überlastgrad einer überlasteten Vermittlungsstelle nahekommt, da dieser eine feinere Abstufung aufweist und bei dessen Ermittlung die Werte der Vergangenheit miteinbezogen werden. Im Unterschied zu einem tatsächlichen momentanen Überlastgrad ist der ermittelte effektive Überlastwert allerdings geglättet, um die Abwehr weicher zu steuern (Glättung bedeutet, daß Spitzen im Verlauf des tatsächlichen Überlastwertes gedämpft werden). Damit schwanken auch die Abwehrrektionen weniger extrem).

Besonders in Zusammenwirken mit einem weiteren Abwehrverfahren (Abwehr an der überlasteten Vermittlungstelle selbst nach dem "Overload Priority Level OPL"), das an Siemens-Vermittlungsstellen verwendet wird, zeigen die Simulationen sehr gute Leistungsdaten (durchgestellte Calls, Wartezeiten, Warteschlangenlängen, Prozessorauslastung) an den überlasteten Vermittlungsstellen. Aber auch ohne weitere Abwehrmaßnahmen neben ACC bewirkt die Erfindung, daß die Vermittlungsstellen sinnvoll entlastet werden.

**Rückgewinnung des tatsächlichen Überlastgrades und Glättung**

Die folgenden Ausführungsbeispiele beruhen alle auf der Idee, den tatsächlichen Überlastgrad aus den groben ACL-Werten 1 und 2 und der indirekten Information aus einer REL-Meldung ohne ACL (bedeutet keine Überlast) zurückzugewinnen und diesen zusätzlich zu glätten, um die Abwehrmaßnahmen zu beruhigen. Zu diesem Zweck wird ein effektive Überlastgrad, der sogenannte OCL (overload congestion level), aus der Historie der empfangenen ACLs, d.h. aus der Information mehrerer zurückliegender ACLs, bestimmt und dieser auf einen Abwehrsteuerungswert abgebildet, gemäß dem die Nachbarvermittlungsstellen in einer feineren Abstufung abwehren. Die feinere Abstufung kann dabei zu dem ITU-Standard konform ausgelegt sein (siehe Ausführungsbeispiele).

Es folgen Ausführungsbeispiele zur Berechnung des geglätteten Überlastgrades OCL (Overload Congestion Level)

**Beispiel 1: Berechnung des Überlastgrades aus allen innerhalb eines gewissen Zeitraums empfangenen ACLs**

Ein einzelner ACL-Wert gibt zwar nur sehr grobe Information über die Überlastsituation, betrachtet man aber die vorher eingetroffenen Werte mit und bestimmt einen vernünftigen Mittelwert, erhält man präzisere Aussagen, die zudem geglättet sind. Der folgende Ansatz wurde in Simulationen getestet und führt zu erheblichen Verbesserungen der Leistung.

Im Abstand von je einer Sekunde wird der Mittelwert über alle im vorausgegangenen Sekundenintervall eingetroffenen ACLs gebildet. Dabei wird REL-Meldungen, die ohne ACC-Information eintreffen, der Pseudo-ACL-Wert 0 zugeordnet. Auf diese Weise wird auch die negative Information einer leeren REL-Meldung d.h. die Information "es liegt keine Überlast vor", genutzt. A(j) soll den Mittelwert über die ACLs und Pseudo-ACLs für das Intervall, dessen Beginn j Sekunden zurückliegt bezeichnen. Die Mittelwerte werden gewichtet und addiert und so der neue Überlastgrad (OCL - Overload Congestion Level) als gewichtetes Mittel gebildet. Der OCL ist eine gestauchte Abbildung des OPLs und kann alle Werte zwischen 0 und 2 annehmen.

$$OCL = \sum_{j=1,\ldots,n} w(j) \cdot A(j), \qquad n = 20, \qquad w(j) = \frac{1/\sqrt{j}}{\sum_{k=1}^{20} 1/\sqrt{k}}.$$

Formel 1: OCL-Bestimmung (jede Sekunde) aus den ACL-Mittelwerten der letzten 20 Sekundenintervalle.

Mit den oben beschriebenen Gewichten $w(j)$ wurden in Simulationen gute Ergenisse erzielt. Natürlich sind grundsätzlich auch weitere Gewichte möglich, wobei für die Glättung wichtig ist, daß die Gewichte mit steigendem Index $j$ nicht zu schnell abfallen.

Als weitere Möglichkeit kann der OCL halb rekusiv bestimmt werden. Dies setzt eine Initialisierung des OCL voraus. Dazu sollte der erste ACL-Mittelwert verwendet werden.

$$OCL_{neu} = \alpha \cdot OCL_{alt} + (1 - \alpha) \cdot A(1)$$

Formel 2: quasi rekursive OCL-Bestimmung

Wählt man $\alpha=1/2$ erhält man die Glieder der geometrische Reihe als Gewichte. Mit $\alpha=0,9$ erhält man in Simulationen eine ähnlich gute Funktionsweise des Verfahrens, wie bei Verwendung der Summenformel in Formel 1. Anhand von Simulationen kann der optimale Wert für $\alpha$ bestimmt werden.

Abgewehrt wird nach folgendem Schema:

Tabelle 2:

| Abwehr gemäß OCL-Werten | |
|---|---|
| Überlastgrad | Abwehr in % |
| 0,00 - 0,249 | 0 |
| 0,25 - 0,499 | 12,5 |
| 0,50 - 0,749 | 25 |
| 0,75 - 0,999 | 37,5 |
| 1,00 - 1,249 | 50 |
| 1,25 - 1,499 | 62,5 |
| 1,50 - 1,749 | 75 |
| 1,75 - 1,999 | 87,5 |
| 2,00 | 100 |

Jeder OCL wird also gemäß Tabelle 2 in einen Wert zur Steuerung des Abwehrgrades abgebildet, der im folgenden auch als Abwehrsteuerungswert bezeichnet wird.

**Beispiel 2: Berechnung eines geglätteten OCLs mit Hilfe des Timers**

Hier werden für den OCL zum Beispiel die 8 Stufen des OPL vorgesehen: 0, 1, 2, 3, 4, 5, 6, 7, 8. Außerdem gibt es zwei Grundzustände einer (Nachbar-)VST bezüglich Congestion :

- "no congestion detected",
- "congestion detected".

Wird zum ersten Mal nach einer Phase normaler Last ein ACL>0 empfangen, ändert sich der Grundzustand zu "congestion detected". Der OCL wird daraufhin z.B. auf den Wert 4 initialisiert. Gleichzeitig wird ein Timer von 1 Sekunde aufgezogen. Nach Ablauf des Timers wird der Mittelwert A(1) über alle ACLs im zurückliegenden Sekundenintervall verwendet, um den OCL anzupassen:

$$A(1) \geq \alpha \Rightarrow OCL_{neu} = \min\left( OCL_{alt} + 1, \ 8 \right) \ ,$$

$$A(1) \leq \beta \Rightarrow OCL_{neu} = \max\left( OCL_{alt} - 1, \ 0 \right) \ .$$

Formel 3: OCL-Anpassung nach Timerablauf.

Für $\alpha$ und $\beta$ werden die Werte $\alpha$=1,5 und $\beta$=0,5 vorgeschlagen. Die optimalen Parmameter können über Simulationen gefunden werden. Bisherige Simualtionen zeigen jedoch, daß das Verfahren - etwa durch Einführen weiterer Schwellwerte - verfeinert werden müßte, um eine zu dem vorigen Abschnitt beschriebenen Verfahren vergleichbare Leistungsfähigleit zu erreichen.

Bleibt der OCL in einem 10-Sekunden-Intervall (ein zweiter Timer) auf 0 und wird nur ACL=0 empfangen, geht die VST in den Grundzustand "no congestion detected" zurück. Gedrosselt wird ähnlich wie im vorangegangenen Vorschlag.

Tabelle 3:

| Abwehr gemäß OCL-Werten | |
|---|---|
| Überlastg rad | Abwehr in % |
| 0 | 0 |
| 1 | 12,5 |
| 2 | 25 |
| 3 | 37,5 |
| 4 | 50 |
| 5 | 62,5 |
| 6 | 75 |
| 7 | 87,5 |
| 8 | 100 |

**Berechnung unter Berücksichtigung der Frequenz ankommender ACLs**

Eine weitere Möglichkeit, Information zurückzugewinnen, ist die Frequenz ankommender ACLs mit einzubeziehen: Der OCL wird mit Empfang jedes ACL aktualisiert. Es werden wieder die OCL-Werte 0, 1, 2, 3, 4, 5, 6, 7, 8 verwendet und wie in Tabelle 3 abgewehrt. Die Anpassung des OCL ist wie folgt geregelt (Initialisierung des OCL_alt: OCL_alt=0).

| OCL_alt | ACL=0 | ACL=1 | ACL=2 |
|---------|-------|-------|-------|
| 0,1,2 | $OCL_{neu} = \max\left(OCL_{alt} - 1,\ 0\right)$ | $OCL_{neu} = \min\left(OCL_{alt} + 1,\ 8\right)$ | $OCL_{neu} = \min\left(OCL_{alt} + 2,\ 8\right)$ |
| 3,4 | $OCL_{neu} = \max\left(OCL_{alt} - 1,\ 0\right)$ | $OCL_{neu} = \min\left(OCL_{alt} + 1,\ 8\right)$ | $OCL_{neu} = \min\left(OCL_{alt} + 2,\ 8\right)$ |
| 5,6 | $OCL_{neu} = \max\left(OCL_{alt} - 1,\ 0\right)$ | $OCL_{neu} = OCL_{alt}$ | $OCL_{neu} = \min\left(OCL_{alt} + 1,\ 8\right)$ |
| 7,8 | $OCL_{neu} = \max\left(OCL_{alt} - 2,\ 0\right)$ | $OCL_{neu} = \max\left(OCL_{alt} - 1,\ 0\right)$ | $OCL_{neu} = \min\left(OCL_{alt} + 1,\ 8\right)$ |

Formel 4: Anpassung des OPL mit jedem eintreffenden ACL (Berücksichtigung der Frequenz)

Weitere Glättung könnte erreicht werden, indem in einem gewissen Zeitintervall nach einer Anpassung des OCLs, alle ankommenden ACLs ignoriert werden. Allerdings widerspräche ein solches Glättungskonzept dem Wunsch, die Frequenz ankommender positiver ACL-Werte auszunutzen.

**Abkürzungen**

ACC     automatic congestion control
ACL     automatic congestion level
CP      Koordinationsprozessor
GP      group processor- Prozessor auf der LTG
LTG     line trunk group - Anschlußgruppe
OCL     overload congestion level
OPL     overload priority level
REL     order: Release
REL-C   message: Release Complete
VST     Vermittlungsstelle

**Patentansprüche**

1. Verfahren zur Überlast-Abwehr für eine Vermittlungsstelle, demgemäß
den Nachbar-Vermittlungsstellen von einer bei sich Überlast feststellenden Vermittlungsstelle über einen netzweit festgelegten Überlast-Wert mitgeteilt wird, in welchem Grad der Überlast sie sich befindet,
**dadurch gekennzeichnet, daß**
in einer Nachbar-Vermittlungsstelle aus der Information mehrerer genannter Überlast-Werte ein effektiver Überlast-Wert ermittelt wird, der zur Steuerung der Abwehrmaßnahme dieser Nachbar-Vermittlungsstelle hinsichtlich der überlasteten Vermittlungsstelle herangezogen wird.

2. Verfahren nach Anspruch 1,
**dadurch gekennzeichnet, daß**
der Überlast-Wert jeweils in einer Call-Processing-Meldung übertragen wird, wobei bei einer ohne einen Überlast-Wert eintreffenden Call-Processing-Meldung die fehlende Überlastinformation als Überlast-Wert 0 interpretiert wird und in die Berechnung des effektiven Überlastwerts miteinbezogen wird.

3. Verfahren nach Anspruch 1 oder 2,

**dadurch gekennzeichnet, daß**

der genannte effektive Überlast-Wert ermittelt wird, indem jeweils nach Ablauf eines bestimmten Zeitintervalls anhand der innerhalb des Zeitintervalls empfangenen Überlast-Werte ein Mittelwert gebildet wird und dieser Mittelwert zur Berechnung des aktuellen effektiven Überlast-Werts verwendet wird.

4.  Verfahren nach Anspruch 1 oder 2,
    **dadurch gekennzeichnet, daß**
    der genannte effektive Überlast-Wert ermittelt wird, indem jeweils nach Ablauf eines Zeitintervalls anhand des Mittelwertes der innerhalb des Zeitintervalls empfangenen Überlast-Werte und des nach Ablauf des vorherigen Zeitintervalls ermittelten effektiven Überlast-Wertes ein aktueller effektiver Überlast-Wert ermittelt wird.

5.  Verfahren nach Anspruch 1 oder 2,
    **dadurch gekennzeichnet, daß**
    der effektive Überlastwert ermittelt wird, indem aus den innerhalb aufeinanderfolgender Zeitintervalle empfangenen Überlastwerten jeweils zeitintervallbezogene Mittelwerte [A(j)] gebildet werden, diese Mittelwerte dann gewichtet werden [w[j]·A(j)] und die gewichteten Mittelwerte schließlich über einen Zeitraum addiert werden [Σ w[j] ·A(j)], wodurch man ein gewichtetes Mittel erhält.

6.  Verfahren nach Anspruch 1 oder 2
    **dadurch gekennzeichnet, daß**
    der genannte effektive Überlast-Wert aus dem letzten effektiven Überlast-Wert und dem Mittelwert der innerhalb des letzten Zeitintervalls empfangenen Überlast-Werte ermittelt wird, indem ein gegenüber dem letzten effektiven Überlast-Wert um einen bestimmten ersten Wert erhöhter effektiver Überlast-Wert gebildet wird, wenn der genannte Mittelwert größer als ein bestimmter erster Schwellwert ist, und ein um einen bestimmten zweiten Wert erniedrigter effektiver Überlast-Wert gebildet wird, wenn der genannte Mittelwert kleiner als ein bestimmter zweiter Schwellwert ist.

7.  Verfahren nach Anspruch 1 oder 2,
    **dadurch gekennzeichnet, daß**
    der genannte effektive Überlast-Wert jeweils nach Empfang eines Überlast-Wertes aktualisiert wird, wobei der aktuelle effektive Überlast-Wert anhand des vorherigen effektiven Überlast-Wertes und des empfangenen Überlast-Wertes ermittelt wird.

8.  Verfahren nach einem der Ansprüche 1 bis 7,
    **dadurch gekennzeichnet, daß**
    der genannte effektive Überlast-Wert nur dann ermittelt wird, wenn Überlast festgestellt wurde, das heißt, wenn in einem bestimmten zurückliegenden Zeitraum mindestens ein positiver Überlast-Wert empfangen wurde.

9.  Verfahren nach einem der Ansprüche 1 bis 8,
    **dadurch gekennzeichnet, daß**
    es sich bei dem genannten Überlast-Wert um einen ACL-Wert nach einem ACC-Standard handelt.

10. Verfahren nach nach einem der Ansprüche 1 bis 9,
    **dadurch gekennzeichnet, daß**
    es sich bei der genannten Abwehrmaßnahme einer Nachbarvermittlungsstelle um ein Abweisen von Calls oder ein alternatives Routen von Calls handelt.

11. Verfahren nach einem der Ansprüche 1 bis 10,
    **dadurch gekennzeichnet, daß**
    der genannte effektive Überlast-Wert auf einen Abwehrsteuerungswert abgebildet wird, gemäß dem eine Nachbarvermittlungsstelle die von ihr durchzuführende Abwehrmaßnahme steuert.

**Claims**

1.  Method for congestion control for a switching centre, in accordance with which the adjacent switching centres of a switching centre which has established it is overloaded beyond an overload value fixed across the network are informed of the degree to which it is in overload, **characterized in that** in an adjacent switching centre the information on a plurality of said overload values is used to determine an effective overload value which is used to control the anticongestion measure from this adjacent switching centre with regard to the overloaded switching centre.

**2.** Method according to Claim 1, **characterized in that** the overload value is transmitted in each case in a call processing message, the missing overload information being interpreted as overload value 0 in the case of a call processing message arriving without an overload value, and also being incorporated into the calculation of the effective overload value.

**3.** Method according to Claim 1 or 2, **characterized in that** the said effective overload value is determined by virtue of the fact that after expiry of a specific time interval the overload values received within the time interval are used in each case to form a mean value, and this mean value is used to calculate the current effective overload value.

**4.** Method according to Claim 1 or 2, **characterized in that** the said effective overload value is determined by virtue of the fact that after expiry of a time interval a current effective overload value is determined in each case with the aid of the mean value of the overload values received within the time interval, and of the effective overload value determined after expiry of the previous time interval.

**5.** Method according to Claim 1 or 2, **characterized in that** the effective overload value is determined by virtue of the fact that the overload values received within consecutive time intervals are used in each case to form mean values [A(j)] referred to time interval, these mean values are then weighted [w[j].A(j)], and the weighted mean values are finally added over a period [Σ w[j]·A(j)], the result being to obtain a weighted mean.

**6.** Method according to Claim 1 or 2, **characterized in that** the said effective overload value is determined from the last effective overload value and the mean value of the overload values received within the last time interval, by virtue of the fact that an effective overload value increased by a specific first value by comparison with the last effective overload value is formed when the said mean value is greater than a specific first threshold value, and an effective overload value lowered by a specific second value is formed when the said mean value is smaller than a specific second threshold value.

**7.** Method according to Claim 1 or 2, **characterized in that** the said effective overload value is updated in each case after receipt of an overload value, the current effective overload value being determined with the aid of the previous effective overload value and the received overload value.

**8.** Method according to one of Claims 1 to 7, **characterized in that** the said effective overload value is determined only if overload has been established, that is to say if at least one positive overload value has been received in a specific past period.

**9.** Method according to one of Claims 1 to 8, **characterized in that** the said overload value is an ACL value according to an ACC standard.

**10.** Method according to one of Claims 1 to 9, **characterized in that** the said anticongestion measure of an adjacent switching centre is a rejection of calls or an alternative routing of calls.

**11.** Method according to one of Claims 1 to 10, **characterized in that** the said effective overload value is mapped onto an anticongestion control value in accordance with which an adjacent switching centre controls the anticongestion measure to be carried out by it.

**Revendications**

**1.** Procédé de réduction des surcharges pour central téléphonique
selon lequel
il est communiqué aux centraux téléphoniques voisins par un central téléphonique se bloquant en cas de surcharge par l'intermédiaire d'une valeur de surcharge déterminée au niveau du réseau à quel degré de surcharge il se trouve,
**caractérisé en ce que**
une valeur effective de surcharge est déterminée dans un central téléphonique voisin à partir de l'information de plusieurs valeurs de surcharges mentionnées, cette valeur effective de surcharge étant prise en considération pour la commande de la mesure de réduction de ce central téléphonique voisin en ce qui concerne le central téléphonique surchargé.

**2.** Procédé selon la revendication 1,
**caractérisé en ce que**
la valeur de surcharge est transférée respectivement dans un message call processing, l'information de surcharge manquante étant interprétée comme valeur de surcharge 0 dans le cas d'un message call processing entrant sans valeur de surcharge et étant également prise en considération dans le calcul de la valeur effective de surcharge .

**3.** Procédé selon la revendication 1 ou 2,
**caractérisé en ce que**
ladite valeur effective de surcharge est déterminée du fait qu'une valeur moyenne est respectivement formée après le déroulement d'un certain intervalle de temps à l'aide des valeurs de surcharge reçues dans l'intervalle de temps, et que cette valeur moyenne est utilisée pour le calcul de la valeur effective actuelle de surcharge.

**4.** Procédé selon la revendication 1 ou 2,
**caractérisé en ce que**
ladite valeur effective de surcharge est déterminée du fait qu'une valeur effective actuelle de surcharge est respectivement déterminée après le déroulement d'un intervalle de temps à l'aide de la valeur moyenne des valeurs de surcharge reçues dans l'intervalle de temps et de la valeur effective de surcharge déterminée après le déroulement de l'intervalle de temps précédent.

**5.** Procédé selon la revendication 1 ou 2,
**caractérisé en ce que**
la valeur effective de surcharge est déterminée du fait que des valeurs moyennes [ A (j) ] faisant référence à des intervalles de temps sont respectivement formées à partir des valeurs de surcharge reçues dans des intervalles de temps successifs, que ces valeurs moyennes sont ensuite pondérées [ w [j] · A (j) ] et que les valeurs moyennes pondérées sont finalement additionnées [ Σ w [j] · A (j) ], sur quoi on obtient une moyenne pondérée.

**6.** Procédé selon la revendication 1 ou 2,
**caractérisé en ce que**
ladite valeur effective de surcharge est déterminée à partir de la dernière valeur effective de surcharge et de la valeur moyenne des valeurs de surcharge reçues dans le dernier intervalle de temps, du fait qu'une valeur effective de surcharge supérieure d'une certaine première valeur par rapport à la dernière valeur effective de surcharge est formée lorsque ladite valeur moyenne est supérieure à une certaine première valeur de seuil et qu'une valeur effective de surcharge inférieure d'une certaine seconde valeur est formée lorsque ladite valeur moyenne est inférieure à une certaine seconde valeur de seuil.

**7.** Procédé selon la revendication 1 ou 2,
**caractérisé en ce que**
ladite valeur effective de surcharge est respectivement actualisée après la réception d'une valeur de surcharge, la valeur effective actuelle de surcharge étant déterminée à l'aide de la valeur effective de surcharge précédente et de la valeur de surcharge reçue.

**8.** Procédé selon l'une des revendications 1 à 7,
**caractérisé en ce que**
ladite valeur effective de surcharge n'est calculée que si une surcharge a été constatée, c'est-à-dire si au moins une valeur de surcharge positive a été reçue dans une certaine période de temps antécédente.

**9.** Procédé selon l'une des revendications 1 à 8,
**caractérisé en ce que**, dans le cas de ladite valeur de surcharge, il s'agit d'une valeur ACL suivant une norme ACC.

**10.** Procédé selon l'une des revendications 1 à 9,
**caractérisé en ce que**
dans le cas de ladite mesure de réduction d'un central téléphonique voisin, il s'agit d'un rejet d'appels ou d'un acheminement alternatif d'appels.

**11.** Procédé selon l'une des revendications 1 à 10,
**caractérisé en ce que**
ladite valeur effective de surcharge est représentée sur une valeur de commande de réduction, selon laquelle un central téléphonique voisin commande la mesure de réduction à exécuter.

# FIG 1

ACC nach ITU-Standard

# FIG 2

Ermittlung des Grades der Überlast

LTG

LTG

VST

SET-UP-COMPLETE
mit OPL

LTG

CP
STATOR
OPL { 0, 1, ..., 6 }

Umrechnung
OPL in ACC
auf jeder LTG

LTG

# FIG 3

Informieren einer Nachbar-VST

# FIG 4

Bündelbezogene Auswertung der Information an der
Nachbar-VST

Nachbar-VST

LTG

LTG

LTG

LTG

Trunkbündel 1

REL-C mit ACL

CP

Trunkdatenbasis

Nachbar-VST 1

Bündel 1

Bündel n

Trunkbündel n

LTG

LTG

LTG

LTG

Nachbar-VST n

Bündel n

Bündel n